# DEMANDE DE BREVET EUROPEEN

(11) **EP 4 656 053 A1**
(43) Date de publication de la demande: **03.12.2025**
(21) Numéro de dépôt: 25165522.1
(22) Date de dépôt: 24.03.2025
(51) Int. Cl.: A23B 2/88, B01F 35/221, B01F 35/91, B05B 15/50, F25D 3/10, F25D 3/11, F25D 29/00, F25D 31/00

(54) **INSTALLATION ET PROCÉDÉ DE REFROIDISSEMENT DE PRODUITS AVEC UN DISPOSITIF D'INJECTION D'UN FLUIDE CRYOGÉNIQUE PAR LE BAS D'UN MÉLANGEUR**

(30) Priorité: 31.05.2024 FR 2405715
(71) Demandeur: L'AIR LIQUIDE, SOCIETE ANONYME POUR L'ETUDE ET L'EXPLOITATION DES PROCEDES GEORGES CLAUDE, 75007 Paris (FR)
(72) Inventeur: REYMOND, Christian, 78350 Les Loges-en-Josas (FR); PICHOU, Michel, 35690 Acigne (FR); LE BOT, Patrick, 78350 Les Loges-en-Josas (FR)
(74) Mandataire: Air Liquide

(57) **Abrégé**

Une installation de refroidissement de produits, notamment alimentaires, comprenant une enceinte, notamment de type malaxeur ou pétrin, permettant de contenir un produit à refroidir, et comprenant un dispositif d'injection d'un fluide cryogénique dans l'enceinte, dispositif permettant l'injection du fluide en un ou plusieurs points situé(s) en partie basse (base) de l'enceinte, dispositif qui comprend une ou plusieurs buses d'injection pouvant être raccordées à ladite partie basse, où l'installation de refroidissement comprend une installation (120) d'alimentation du ou de chacune des buses d'injection en un gaz de balayage, par exemple en air comprimé ou encore en azote gazeux, buses d'injection qui sont alimentées en fluide cryogénique et en gaz de balayage par un ensemble de canalisations,
se caractérisant par la mise en œuvre des mesures suivantes :
- l'ensemble de canalisations comprend pour chacune des buses une ligne (130) d'alimentation de la buse considérée en fluide cryogénique, ligne qui est munie d'une électrovanne (131) ;
- l'ensemble de canalisations comprend pour chacune des buses, une ligne (140) d'alimentation de la buse considérée en ledit gaz de balayage, chaque ligne d'alimentation en gaz de balayage étant munie en série d'un orifice calibré (141) et d'un capteur de pression (142), ligne de balayage se raccordant, en aval du capteur, sur la ligne d'alimentation en fluide cryogénique lui correspondant pour une buse considérée, en un point de la ligne d'alimentation en fluide cryogénique se situant entre l'électrovanne et la buse considérée.

## Description

La présente invention est relative à un dispositif d'injection d'un fluide, en particulier un dispositif destiné à injecter, dans une enceinte, un fluide cryogénique, sous une pression supérieure à celle qui règne dans l'enceinte. On pourra parler dans ce qui suit de « dispositif d'injection » ou de « buse d'injection ».

Il est connu de refroidir le contenu d'un malaxeur ou d'un pétrin en introduisant du CO₂ liquide ou de l'azote liquide (LN2) à la base de la cuve du malaxeur ou pétrin. Le fluide, introduit sous pression par l'intermédiaire d'une buse d'injection, se transforme, dès sa détente, à la sortie de la buse, en solide pour le CO₂, et en liquide et gaz froid pour l'azote. Ainsi pour le CO₂, le solide ou le liquide se mélange au contenu du malaxeur et le refroidit, cependant que le gaz froid contribue également au refroidissement en traversant l'ensemble de la masse contenue dans la cuve.

Une solution connue pour la mise en œuvre de ce procédé comporte plusieurs dispositifs d'injections, disposés dans le fond de la cuve (partie basse de la cuve), et alimentés en fluide par un ensemble de canalisations.

De tels dispositifs d'injection de fluide cryogénique sont décrits dans le document WO 2008/007000. Ils comprennent une tête d'alimentation en fluide et un corps de distribution du fluide, parcourus par des passages de circulation du fluide communiquant les uns avec les autres.

Dans ce type d'installations, les dispositifs d'injection sont susceptibles d'être souillés par différentes salissures, non seulement au niveau de leurs surfaces externes mais également en certaines parties des passages de circulation du fluide. Ils doivent donc pouvoir être démontés en vue d'un nettoyage qui est obligatoire en cas de produits alimentaires et qui peut être rendu nécessaire par un fonctionnement anormal ou encore, par une pollution accidentelle.

Les dispositifs d'injection décrit dans le document WO 2008/007000 pouvaient présenter des difficultés de nettoyage, justifiant des modifications de ce dispositif antérieur, modifications que la Demanderesse a proposées dans le document EP-3 600 682-B1. Selon ces modifications et améliorations, le dispositif d'injection d'un fluide, notamment cryogénique, comprenant une tête d'alimentation en fluide et un corps de distribution du fluide, monté de façon détachable sur ladite tête d'alimentation, était remarquable en ce que ladite tête d'alimentation comprend une gorge de circulation du fluide, alimentant ledit corps, ladite gorge étant fermée en position montée du corps sur la tête d'alimentation et ladite gorge étant ouverte en position démontée de la tête d'alimentation et du corps.

Et ainsi, grâce à la configuration ouverte de ladite gorge, on dispose d'un passage de circulation du fluide facile d'accès, après démontage du corps et de la tête et ladite tête de distribution peut donc être maintenue dans un état de propreté optimale sans nécessité d'opérations de nettoyage complexes et finalement peu fiables, comme cela était le cas avec les dispositifs antérieurs (on comprend en effet que l'avantage est qu'une fois la buse ouverte, toutes les surfaces à nettoyer sont accessibles et visibles pour le contrôle).

La structure de ces dispositifs antérieurs est ici intégrée pour référence mais nous allons néanmoins rappeler dans ce qui suit en détails, à l'aide des figures annexées, la structure de ces dispositifs de l'art antérieur :
- La [Fig.1] est une vue schématique en coupe d'une installation comprenant une enceinte et des dispositifs d'injection conformes à l'art antérieur, on y visualise également le circuit d'alimentation en gaz pour maintenir une surpression en dehors des phases d'injection de liquide ;
- La [Fig.2] est une vue, en élévation, d'un dispositif conforme à l'art antérieur ;
- La [Fig.3] est une vue, en coupe longitudinale, du dispositif de la [Fig.2],
- La [Fig.4] est une vue, en perspective, d'une partie du dispositif de la [Fig.2], (la tête) coupée selon le même plan de coupe que celui de la [Fig.3] ;
- La [Fig.5] reprend la [Fig.4] selon une variante de réalisation et selon une orientation légèrement différente ;
- La [Fig.6] est une vue, en perspective, d'une variante de réalisation, d'un dispositif conforme à l'art antérieur, de la partie du dispositif illustré aux figures 4 et 5 ;
- La [Fig.7] est une vue, en perspective, de la partie du dispositif illustré à la [Fig.6], selon un plan de coupe permettant de voir un détail dudit dispositif ;
- La [Fig.8] est une vue de côté illustrant en transparence une variante de réalisation d'une partie du dispositif (le corps) conforme à l'art antérieur ;
- La [Fig.9] est une vue, en perspective, de dessus montrant une variante d'assemblage d'un corps et d'une tête d'un dispositif conforme à l'art antérieur ;
- La [Fig.10] est une vue schématique illustrant une partie du dispositif illustré à la [Fig.9], au niveau du plan de coupe P' représenté à cette figure.

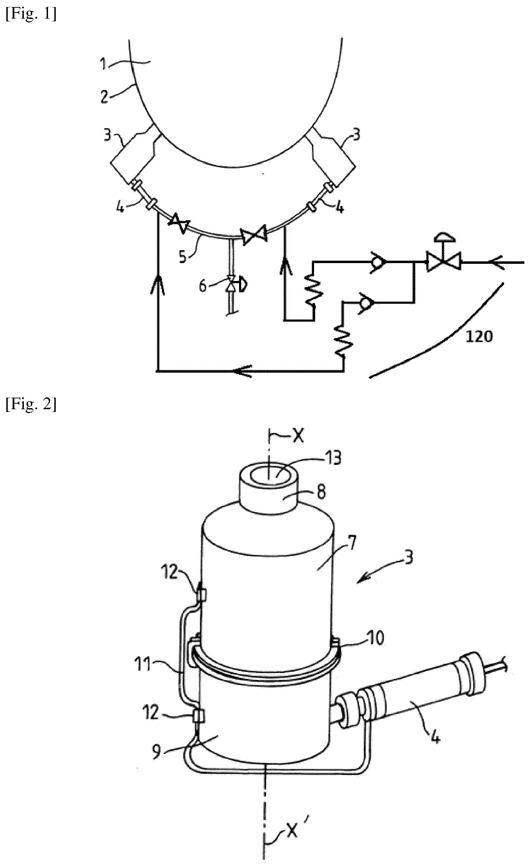

Comme illustré aux figures 1 à 3, le dispositif 3 d'injection d'un fluide, notamment cryogénique, est destiné à être fixé sur la partie inférieure d'un récipient contenant un produit à refroidir en vrac.

Le dispositif est adapté au refroidissement de produit aussi bien sous forme liquide, que pâteuse, solide ou granulaire. Par " produit pâteux ", on entend tout produit dont la viscosité est comprise entre liquide et solide.

Le fluide cryogénique utilisé est de l'azote liquide ou du CO2 liquide notamment quand le produit à refroidir est un produit alimentaire. Cependant, le dispositif selon cet art antérieur peut être mis en œuvre avec tout type de fluide cryogénique.

A titre d'exemple d'utilisation de ce dispositif, la [Fig.1] montre la partie inférieure d'un récipient formé d'une enceinte 1, notamment une cuve de malaxage, sur la paroi de laquelle sont fixés, de préférence par soudure, deux dispositifs 3 d'injection de fluide cryogénique conformes à l'art antérieur. Les dispositifs 3 sont reliés par un tuyau flexible 4 et un tuyau 5 à une électrovanne 6. Les dispositifs peuvent être fixés sur la partie inférieure de la cuve de malaxage.

Comme évoqué plus haut dans la présente description, la [Fig.1] montre la présence d'une installation 120, permettant l'alimentation des buses 3 en air comprimé ou autre gaz de balayage, notamment inerte, notamment de l'azote:
- une électrovanne alimentant en gaz deux lignes, une ligne pour chaque buse 3 ;
- chaque ligne est munie d'un clapet anti-retour suivi d'un système de type « queue de cochon », la présence du clapet anti-retour étant avantageuse pour garantir que du cryogène (de l'azote ou du CO₂ ) ne pourra remonter dans le circuit servant pour l'air comprimé, tandis que la présence des « queues de cochon » est avantageuse pour garantir que le composant en amont (le clapet anti retour) ne sera mis en présence que de gaz, et pas de liquide.

La [Fig.2] montre plus en détail un dispositif 3 d'injection selon l'art antérieur. Il comprend, dans une partie supérieure, un corps 7 de distribution du fluide et, dans une partie basse, une tête 9 d'alimentation. Le corps 7 et la tête 9 sont montées de façon détachable l'un sur l'autre, par exemple par des agrafes d'assemblage 10. Il pourra encore s'agir d'un raccord du type vissé ou analogue.

Ledit dispositif présente, par exemple, une configuration de révolution autour d'un axe longitudinale X-X', ici vertical. Ladite tête d'alimentation 9 et ledit corps 7 s'étendent eux-mêmes selon ledit axe longitudinale X-X' dans la prolongation l'un de l'autre. Une extrémité libre 8 dudit corps 7 formant un col est destinée à être fixée sur la paroi externe de l'enceinte 1.

A la tête 9 dudit dispositif 3 est relié le tuyau flexible 4. Un câble anticorps de fouet 11 relie ici le tuyau flexible 4, la tête 9 et/ou le corps 7. Ce câble est fixé à l'aide de crochets de sécurité 12 de telle sorte que seuls des personnes habilitées puissent le défaire par exemple en vue d'un démontage.

Le dispositif est relié à l'alimentation en fluide cryogénique par l'intermédiaire du conduit flexible fluidique 4. Ceci permet un démontage rapide. En effet, le conduit flexible 4 n'a pas à être démonté pour le nettoyage.

Le nettoyage est encore facilité par le maintien du conduit flexible 4 sur le dispositif 3 par un système de maintien mécanique rapide du type raccord rapide afin d'aussi permettre le démontage du conduit flexible 4 dans les cas où cela s'avère finalement nécessaire.

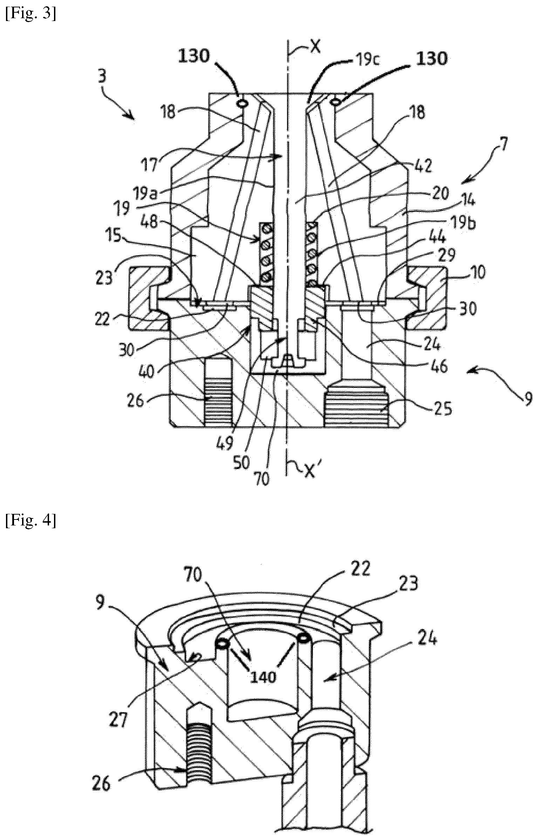

Comme illustré à la [Fig.3], ledit corps 7 est avantageusement creux et une soupape 17, forcée par un ressort 19, est insérée dans le corps 7. Le corps 7 comprend en outre un ou plusieurs canaux 18, dont deux sont visibles à la [Fig.3]. Lesdits canaux 18 sont sensiblement parallèles à ladite soupape et sont destinés à être alimentés en fluide cryogénique sous pression, une extrémité amont desdits canaux 18 étant relié à ladite tête d'alimentation 9 en fluide cryogénique et une extrémité aval débouchant au niveau d'un siège de la soupape 17.

Le ressort 19 comprend une pluralité de spires. Il est taré de telle sorte que la soupape ne puisse pas coulisser sans être soumise à une pression du fluide cryogénique au moins égale à une pression seuil.

Ainsi dès que la pression de fluide cryogénique est inférieure à un seuil déterminé, la pression nécessaire pour faire coulisser la soupape 17 ne sera plus atteinte et la soupape 17 se repositionnera de façon étanche contre son siège.

Le choix du ressort et son tarage sont fonction du fluide cryogénique qui est utilisé. Ainsi pour de l'azote il doit pouvoir être taré typiquement entre 0 et 7 bars et pour le CO2 jusqu'à 25 bars.

Le dispositif comprend « n » canaux 18 traversant, n'étant typiquement compris entre 1 et 20, leur nombre augmente lorsque la pression d'utilisation du fluide cryogénique diminue. Lesdits canaux 18 forme un faisceau orienté de façon coaxiale à la soupape 17, selon l'axe longitudinal X-X', lesdits canaux étant régulièrement répartis angulairement autour dudit axe. Lesdits canaux sont, notamment, au nombre de trois au moins. Ici sur le mode illustré, ils sont au nombre de six. Une telle configuration est particulièrement adaptée à des applications azote. Comme signalé dans ce document antérieur, ce dispositif n'est pas limité à de telles applications mais trouve aussi des applications pour du CO₂. Dans un tel cas, le nombre de canaux 18 est avantageusement de deux, positionnés à 180° l'un de l'autre.

Le corps 7 est constitué, par exemple, de deux éléments, une pièce externe 14, creuse, dont une extrémité inférieure vient indirectement en appui sur la tête 9 et dont l'autre extrémité est destinée à être fixée sur la paroi de l'enceinte. A l'intérieur de cette pièce externe 14, est disposée une pièce interne 15 de forme complémentaire, également creuse, présentant en son centre une ouverture traversante accueillant la soupape 17. Ladite pièce interne 15 est aussi traversée par les canaux 18.

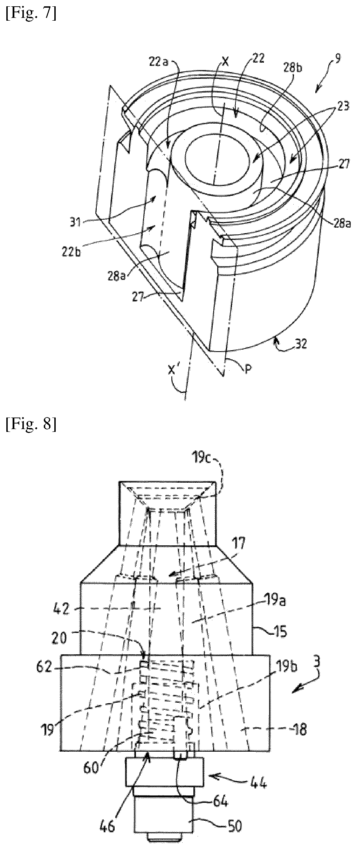

L'ouverture traversante centrale de la pièce interne 15 comprend trois zones, une zone centrale 19a de diamètre sensiblement égale à celui de la soupape de telle sorte que la soupape peut être placée en coulissement dans cette zone et une zone inférieure 19b de diamètre supérieur, de telle sorte qu'elle puisse recevoir autour de l'axe de la soupape le ressort 19 forçant celle-ci. Le ressort 19 est maintenu par un premier épaulement 20 formé entre les zones 19a et 19b. A l'extrémité opposée supérieure, la zone 19c est de forme biseautée, de diamètre plus large en son extrémité libre, la forme du biseau étant adaptée pour définir le siège de la soupape 17, lorsque la soupape 17 est forcée par le ressort. Une telle configuration est aussi visible dans le mode de réalisation de la [Fig.8].

On note sur la [Fig.3] la présence d'un joint torique 130, dont la présence est très avantageuse pour empêcher d'éventuelles entrées de produit alimentaire, et tout particulièrement de jus ou liquide, dans la buse, quand celle-ci est à l'arrêt , et notamment entre l'embase et le corps de la buse, c'est-à-dire entre la pièce externe 14 et la pièce interne 15 qui est munie des canaux 18 etc.....

Comme cela est mieux visible aux figures 4 à 7, ladite tête d'alimentation 9 comprend une gorge 22 de circulation du fluide alimentant ledit corps 7, plus particulièrement l'ensemble desdits canaux 18 dudit corps 7 dont l'extrémité amont débouche dans ladite gorge 22.

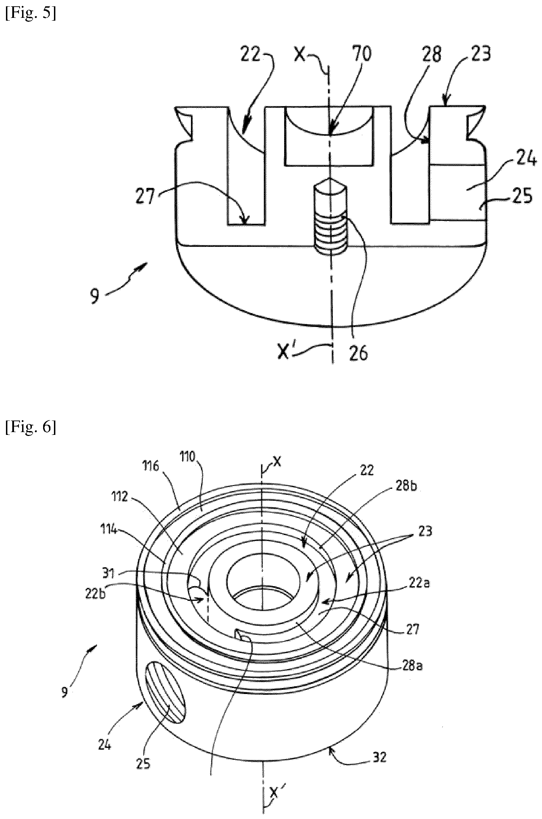

Si l'on se reporte de nouveau à la [Fig.3], on constate que ladite gorge est fermée en position montée du corps 7 sur la tête d'alimentation 9. A l'inverse, ladite gorge 22 est ouverte en position démontée de la tête d'alimentation 9 et du corps 7, une telle configuration correspondant à ce qui est illustré aux figures 4 et 5.

Il apparaît tout d'abord qu'une telle gorge permet d'établir une communication avec plusieurs canaux 18 du corps 7 sans que ces canaux soient seulement au nombre de deux, et plus particulièrement encore, sans que ces canaux ne soient diamétralement opposés. De plus, après démontage, la tête d'alimentation est particulièrement simple à nettoyer puisqu'une une partie essentielle de celle-ci, à savoir la partie formée par la gorge 22, est d'accès direct, ceci depuis la partie supérieure ouverte de la gorge.

Ladite tête d'alimentation 9 est avantageusement monobloc, c'est-à-dire constituée d'une seule pièce, ladite gorge 22 étant obtenue, par exemple, par usinage de ladite tête d'alimentation 9. On dispose de la sorte d'une solution d'une grande simplicité de mise en œuvre. En effet, sans avoir à démonter une tête d'alimentation 9 qui aurait été constitué de plusieurs pièces, on peut nettoyer la gorge 22 par sa partie supérieure ouverte.

Ladite tête d'alimentation 9 présente ici une face 23 au niveau de laquelle ladite gorge 22 débouche en position démontée de la tête d'alimentation 9 et du corps 7, ladite face 23 étant orientée orthogonalement à l'axe d'extension longitudinale X-X'.

Ladite gorge 22 est, par exemple, annulaire et s'étend angulairement autour de l'axe longitudinale X-X'. Elle est coaxiale avec la soupape 17.

Selon le mode de réalisation des figures 3 à 5, ladite gorge présente avantageusement une profondeur, c'est-à-dire une dimension selon l'axe longitudinale X-X', sensiblement constante. Elle présente ici une section en U.

Ladite tête d'alimentation 9 comprend un conduit 24 de circulation du fluide destiné à distribuer le fluide dans ladite gorge 22. Ledit conduit 24 présente à son extrémité opposée à celle débouchant dans la gorge 22 un taraudage 25 permettant la fixation du raccord rapide évoqué plus haut. Ladite d'alimentation 9 comprend en outre ici un alésage 26, éventuellement taraudé.

Dans le mode de réalisation des figures 3 et 4, ledit conduit 24 débouche sur une paroi de fond 27 de la gorge 22. Dans ce mode, ladite gorge présente une faible profondeur, à savoir une profondeur inférieure au quart d'une extension de ladite tête d'alimentation selon ladite direction longitudinale X-X'.

Comme illustré à la [Fig.5], dans un autre mode de réalisation, ladite gorge 22 présente une section de passage du fluide supérieure à la section de passage du fluide dans le corps, c'est-à-dire, à la section cumulée des canaux 18 du corps 7. On évite de la sorte un effet de détente de fluide en amont des orifices de sortie des canaux 18.

Ladite gorge présente ici une profondeur supérieure au trois quart de l'extension de ladite tête d'alimentation 9 selon ladite direction longitudinale X-X'. Dans ce mode de réalisation, ledit conduit 24 débouche sur une paroi latérale 28 de la gorge 22.

Et l'on a fait figurer sur la [Fig.4] du document antérieur (et uniquement sur la [Fig.4] pour des raisons de bonne visibilité), la présence avantageuse d'un joint 140, situé sur la marche qui fait face à la marche 23 de l'autre côté de la rainure ou gorge, présence tout particulièrement avantageuse pour limiter les risques d'entrée de poussière au niveau de la gorge 22.

Comme illustré aux figures 6 et 7, selon un autre mode de réalisation antérieur, une première partie 22a de ladite gorge 22 présente une profondeur réduite et une seconde partie présente une profondeur plus importante, formant une cavité 22b. Autrement dit, le fond 27 de la gorge se situe à deux niveaux différents. Le fond 27 de la gorge est situé relativement proche de la surface 23 au niveau de laquelle ladite gorge 22 débouche dans la partie 22a où la gorge est de plus faible profondeur et relativement proche d'une surface de base 32 de ladite tête d'alimentation 9, au niveau de ladite cavité 22b, ladite surface de base 32 étant opposée à ladite surface 23 selon l'axe longitudinale XX' du dispositif. La profondeur de la première partie 22a de la gorge est, par exemple, deux à dix fois plus faible que la profondeur de la cavité 22b, ladite profondeur étant mesurée à chaque fois depuis ladite surface 23 au niveau de laquelle ladite gorge 22 débouche jusqu'à la partie respective du fond 27.

La cavité 22b est plus visible à la [Fig.7] où elle est coupée par le plan de coupe P. Ladite cavité présente une section transversale sensiblement en forme de portion angulaire d'anneau. Ici, dans chacune de ses premières et secondes parties 22a, 22b, le fond 27 de la gorge 22 est plat. Les bords 31 d'extrémité angulaire de la cavité 22b sont, par exemple, arrondis. En variante, ils pourront être orientés radialement.

Ladite première partie 22a de la gorge et ladite seconde partie 22b de la gorge sont complémentaires et forment l'intégralité de la gorge 22. La première partie 22a de la gorge 22 comme la cavité 22b présente une paroi latérale interne 28a en continuité l'une de l'autre et formant un cylindre, de plus grande dimension axiale au niveau de la cavité 22b. De même, la première partie 22a de la gorge 22 comme la cavité 22b présente une paroi latérale externe 28b en continuité l'une de l'autre et formant un cylindre, de plus grande dimension axiale au niveau de la cavité 22b, cette partie de plus grande dimension étant cachée sur les figures. Ladite seconde partie 22b de la gorge 22 présente une étendue angulaire comprise, notamment, entre 30° et 90°.

Selon ce mode de réalisation, ledit conduit 24 (visible [Fig.6]) débouche sur la paroi latérale externe de la gorge 22, notamment au niveau de ladite cavité 22b, ici sensiblement en son milieu, selon l'étendue angulaire de ladite cavité 22b. Ledit conduit 24 est, par exemple, orienté radialement.

Si l'on se reporte de nouveau à la [Fig.3], on constate que, préférentiellement, ledit dispositif comprend un joint 29 fermant ladite gorge 22, en prenant appui sur la surface 23, ladite surface 23 formant un épaulement périphérique en liaison avec un bord supérieur de la tête d'alimentation 9. Ledit joint 29 est pris en sandwich entre ladite tête 9 et ledit corps 7. Ledit joint 29 présente des orifices 30, chacun des orifices 30 étant situé en vis-à-vis de l'un des canaux 18 du corps 7. Lesdits orifices 30 permettent de la sorte le passage du fluide de ladite gorge 22 vers lesdits canaux 18 du corps 7 tout en assurant une étanchéité entre ladite tête d'alimentation 9 et ledit corps 7. Un joint de même type est utilisé dans les modes de réalisation des figures 5 à 7.

Selon un autre aspect du dispositif de l'art antérieur, ledit dispositif comprend une butée 40, montée sur une tige 42 de la soupape, ledit ressort 19 prenant appui sur ladite butée 40.

Ladite butée 40 comprend préférentiellement une première pièce 46, destinée à être standard, et une deuxième pièce 48, destinée à être spécifique à chaque application. En particulier, l'épaisseur de la première pièce 46, c'est-à-dire la dimension de la première pièce 46 selon l'axe X-X', est constante d'un dispositif à l'autre tandis que l'épaisseur de la seconde pièce 48 pourra être adaptée d'une application à l'autre de façon à prendre en compte, notamment, les variations de pression à l'intérieur de l'enceinte.

Ici, ladite tige 42 comprend une portion 49 de diamètre réduit et ladite butée comprend un anneau de montage 50. Ladite tige 42 et ledit anneau de montage 50 sont mutuellement configurés pour permettre un encliquetage dudit anneau 50 sur ladite tige 42 au niveau de ladite portion de diamètre réduit 49 de façon à positionner axialement lesdites première 44 et/ou seconde pièces 46 de la butée le long de ladite tige 42. Lesdites première et seconde pièces 44, 46 présentent un alésage centrale de diamètre sensiblement identique à celui du diamètre de la tige 42 de sorte à pouvoir être emmanché dessus depuis une extrémité proximale de ladite tige 42, opposée à l'extrémité portant la tête de la soupape 17. Ladite tige 42 forme un épaulement pour l'anneau de montage 50 à la liaison entre la portion de diamètre réduit 49 et ladite extrémité distale. Ledit anneau de montage 50 est avantageusement de configuration symétrique de manière à pouvoir être monté dans un sens comme dans l'autre sur la tige 42 de la soupape. Ledit anneau de montage 50 ainsi que les première et secondes pièces 44, 46 de la butée présentent ici une configuration de révolution autour de l'axe XX'.

Comme illustré à la [Fig.8], selon une variante de réalisation, ledit dispositif comprend en outre des moyens de centrage du ressort 19 de manière à tenir ledit ressort radialement à distance de la soupape 17. Autrement dit, grâce auxdits moyens de centrage, il y a un jeu radial suffisamment grand pour éviter le contact entre la tige 42 de la soupape et les spires du ressort 19. On évite la sorte une abrasion de ces pièces par frottement l'une contre l'autre.

Ici, lesdits moyens de centrage comprennent un doigt de centrage 60 d'une première extrémité du ressort 19. La ou les spires de la première extrémité du ressort 19 sont ajustées sur ledit doigt de centrage 60. Autrement dit, un diamètre dudit doigt de centrage 60 et un diamètre interne des spires du ressort 19 correspondent de sorte à permettre un emmanchage du ressort 19 sur le doigt de centrage 60 avec un très léger jeu.

Ledit doigt de centrage 60 est monté sur ladite soupape 19, notamment sur la tige 42 de la soupape. Ledit doigt centrage 60 et ladite butée 40, en particulier la pièce 46 spécifique à chaque application de ladite butée 40, forment une seule et même pièce. Ledit doigt de centrage présente ici une configuration de révolution autour de l'axe XX'.

Lesdits moyens de centrage comprennent encore ici une cheminée de guidage 62 d'une seconde extrémité du ressort 19, opposée à la première extrémité. La ou les spires de la seconde extrémité du ressort 19 sont ajustées dans ladite cheminée 62. Autrement dit, un diamètre de ladite cheminée 62 et un diamètre externe des spires du ressort 19 correspondent de sorte à permettre un emmanchage du ressort 19 dans la cheminée 62 avec un très léger jeu. Ladite cheminée de guidage 62 est formée dans ledit corps, par exemple, au niveau d'une partie haute de la zone inférieure 19b.

A la [Fig.8], on voit encore un pion de guidage 64 dudit dispositif. Il permet de positionner ladite tête d'alimentation 9 sur ledit corps 7.

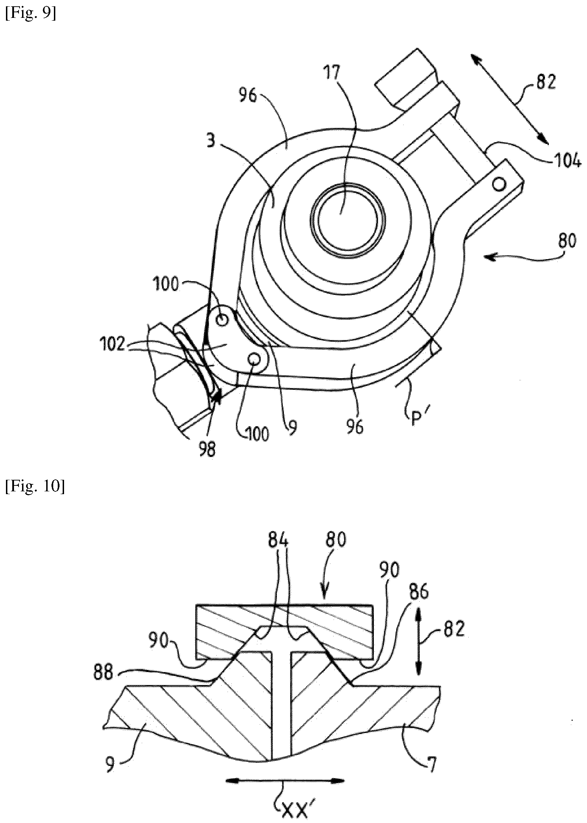

Comme illustré aux figures 9 et 10, selon une variante de fixation de ladite tête d'alimentation 9 sur ledit corps 7, ledit dispositif comprend une bride d'assemblage 80 du corps 7 et de la tête de distribution 9, ledit dispositif étant configuré pour transformer un mouvement de serrage radiale de ladite bride 80, par rapport à l'axe d'extension longitudinale XX' dudit dispositif, mouvement de serrage ici illustré par la flèche 82 à la [Fig.10], en un mouvement de serrage de la tête 9 et du corps 7 l'un contre l'autre selon ledit axe d'extension longitudinale XX'.

Pour cela, ici, ladite bride 80 ainsi que ledit corps 7 et/ou ladite tête 9 présentent une surface inclinée 84, 86, 88 par rapport audit axe longitudinale, lesdites surfaces inclinées étant destinées à coopérer l'une avec l'autre lors du serrage de la bride 80. On réalise de la sorte un contact du type cône contre cône grâce auquel le serrage radial de la bride 80 permet de rapprocher la tête 9 du corps 7.

La bride 80 comprend en outre une ou des butée 90, situées au niveau d'une extrémité distale de la surface inclinée 84 de ladite bride. La ou lesdites butées 90 de la bride sont définies par une surface annulaire distale de ladite bride 80. Avantageusement, la configuration des surfaces inclinées 84, 86, 88 permet d'améliorer l'étanchéité du dispositif en assurant un serrage de la tête 9 contre le corps 7 avant que la bride ne vienne en butée radiale contre le corps 7 et/ou la tête. Autrement dit, la ou lesdites butées 90 de la bride sont configurées pour rester à distance d'une ou de dites parties, ici prévues cylindriques, du corps 7 et/ou de la tête 9, situées au voisinage des surfaces inclinées 86, 88, dudit corps 7 et/ou de ladite tête 9, respectivement, après serrage.

Si l'on se reporte à la [Fig.9], on constate que ladite bride 80 présente, par exemple, une configuration de pince. Elle comprend deux bras 96, sensiblement en forme de C, articulés l'un par rapport à l'autre. Lesdits bras 96 enserrent radialement ledit corps 7 et ladite tête 9, au niveau de leur zone de liaison.

Lesdits bras 96 sont articulés, par exemple, au niveau d'un pivot 98. Ledit pivot 98 comprend ici un axe d'articulation 100 pour chaque bras 96. Lesdits axes d'articulation 100 sont reliés par des platines 102. Ils sont situés à une extrémité desdits bras 96. A l'extrémité diamétralement opposé desdits bras 96 une vis 104 dudit dispositif permet de rapprocher les bras 96 l'un contre l'autre selon ladite direction de serrage radiale 82 de la bride 80.

En complément ou alternativement, pour améliorer l'étanchéité du dispositif, ce dispositif comprend un joint périphérique, non illustré, entre ladite tête d'alimentation 9 et ledit corps 7. Si l'on se reporte de nouveau à la [Fig.6], on voit que ladite tête d'alimentation 9 comprend en ce sens, dans ce mode de réalisation, un logement périphérique 110 pour ledit joint périphérique. Ledit joint périphérique est situé ici au-delà du joint fermant la gorge 22, ledit joint fermant la gorge 22 étant non illustré à cette figure mais destiné à prendre appui, au niveau de sa périphérie externe, sur une portée 112 de la face 23 au niveau de laquelle ladite gorge 22 débouche.

Ledit logement périphérique 110 est ici situé entre une rainure périphérique interne 114 et une rainure périphérique externe 116 de ladite tête d'alimentation 7. Ladite rainure périphérique interne 114 délimite extérieurement le logement pour le joint fermant la gorge 22. Lesdites rainures périphériques interne 114 et externe 116 sont concentriques.

Ladite tête d'alimentation 9 présente en outre un puit 70 de déplacement de la soupape 17. Ledit puit 70 et ladite gorge 22 sont positionnés de façon concentrique. Le puit 70 est dans le prolongement de l'ouverture 19b du corps 7, la butée 40 étant mobile dans le volume formé par ledit puit 70 et l'ouverture 19b lors de l'actionnement de la soupape 17.

En fonctionnement, la vanne 6 est ouverte, et le fluide cryogénique est envoyé par les tuyaux 5 puis le flexible 4 dans l'intérieur du dispositif 3, à travers la tête 9, en passant par le conduit 24 et la gorge 22, puis il pénètre dans chacun des canaux 18 du corps 7. Le fluide sous pression exerce alors une pression sur le siège de la soupape, un espace est alors formé entre la partie 19c et le siège de la soupape. Le solide commence à se former dans cet espace par les effets de pression et de température et il est forcé à l'intérieur de l'enceinte. Lorsqu'il est nécessaire d'arrêter l'alimentation en fluide cryogénique, la vanne 6 est fermée.

On a signalé plus haut les risques de voir, lorsque la buse est à l'arrêt, des liquides entrer dans la structure de la buse. En effet on peut considérer que lorsque la buse est en opération, les produits traités ne sont pas liquides (par exemple de la viande hachée), les produits sont refroidis donc visqueux, et par ailleurs du fait de la présence du fluide cryogénique, on a une surpression à l'intérieur de la buse, donc les produits sont repoussés.

En revanche, à l'arrêt, il y a donc un risque, selon les produits traités, de voir des liquides s'introduire dans la buse (Lors du chargement en produit du mélangeur (produit chaud donc moins visqueux) ou encore lors des phases de nettoyage (eau, détergent....).

Ce peut être le cas comme on l'a dit entre l'embase et le corps de la buse, c'est-à-dire entre la pièce externe 14 et la pièce interne 15, ce peut être également le cas dans les canaux 18 et dans l'inter-espace cylindrique entourant la tige 42 de la soupape.

On a donc proposé selon cet art antérieur de balayer la buse lorsque celle-ci est à l'arrêt à l'aide d'air comprimé (ou de tout autre gaz de balayage convenant à cette industrie), par exemple à l'aide de l'installation antérieure 120 représentée en [Fig.1].

Il est alors apparu à la Demanderesse qu'il était nécessaire de proposer des améliorations au dispositif de balayage de l'art antérieur selon le document EP 3 600 682-B1.

Un des objectifs techniques à la base de la présente invention est d'être en mesure de maintenir l'intérieur de la buse, de chaque buse, en surpression (c'est le principe de la salle blanche) pour, avec une approche préventive, pouvoir garantir que l'intérieur de la buse reste et est resté propre.

Cette nouvelle disposition, en plus de permettre un contrôle fin de l'injection, permet d'optimiser les opérations en réduisant les opérations de démontage pour le nettoyage des buses du fait de cette surveillance préventive.

Cette nouvelle disposition va par ailleurs permettre de donner plus de souplesse lors de l'intégration des buses sur le malaxeur (en d'autres termes, que le flexible ou l'électrovanne soit en point haut n'est plus une question critique).

On rappellera que toute contamination de la buse par du produit alimentaire peut représenter un risque sanitaire. Le démontage et le nettoyage de la buse du fait de l'intégration sur le mélangeur peut être une opération très pénalisante.

Ainsi, pour garantir que l'intérieur de la buse est resté propre, il a été considéré par la Demanderesse que des mesures d'amélioration du dispositif de l'art antérieur devaient être proposées et comme on le verra plus en détails dans ce qui suit, la nouvelle installation selon la présente invention cherche à permettre la réalisation des objectifs techniques suivants :
- Le balayage en gaz d'une buse donnée doit être permanent, ce que l'on va expliquer.

Même si le balayage en question peut mettre en œuvre de l'air, on préférera selon la présente invention l'utilisation d'azote gazeux, et comme on le verra ci-dessous, la réalisation et la mise à disposition d'une source d'azote gazeux toujours disponible fait partie de la présente proposition.

La source de gaz doit être compatible avec les exigences de sécurité alimentaire, on peut à ce titre utiliser l'azote gazeux du stockage d'azote liquide présent sur le site et mis en œuvre pour le refroidissement cryogénique du contenu du mélangeur.

Ce balayage est préférentiellement assujetti à une condition de sécurité avec la mise en œuvre de plusieurs seuils sur la teneur en oxygène régnant dans l'atelier environnant l'équipement de refroidissement :
- Un SEUIL 1 : seuil considéré comme nécessitant des mesures correctives mais où les opérations de refroidissement ne sont pas stoppées.
- Un SEUIL 2 : seuil considéré comme dangereux, nécessitant de couper l'alimentation en Azote liquide de l'équipement, d'évacuer les locaux, et de prendre les mesures correctives immédiates permettant de rétablir une atmosphère non dangereuse.
- Un SEUIL 3: Le maintien d'une légère surpression dans la buse implique que l'on ait un petit débit de fuite par buse, typiquement de quelques L/min au maximum.

Même en cas de SEUIL 2 on préfère maintenir le système en surpression et continuer à avoir un faible débit résiduel (si on ne peut pas garantir que les buses sont restées en surpression, on ne peut plus garantir que les buses sont propres et dans ce cas il est supposément nécessaire de démonter les buses pour les nettoyer. Les quantités de gaz mises en œuvre si on considère ce débit de fuite sont normalement considérées comme négligeables).

A titre illustratif on peut considérer un SEUIL 3=SEUIL 2 -1% .

Expliquons dans ce qui suit cette condition de balayage « permanent ».

Quand on est en phase d'injection du cryogène, c'est ce dernier qui assure une surpression de l'intérieur de la buse concernée par rapport à l'extérieur, excluant ainsi de fait les possibilités de voir du produit alimentaire entrer dans la buse.

Un traitement de refroidissement (par exemple d'un lot de viande) dure typiquement quelques minutes, mais en pratique, une buse injecte environ 50% du temps pour le cycle considéré.

Considérons pour mieux comprendre la situation l'exemple pratique suivant : un malaxeur équipé de 10 buses, dans la pratique, si le cycle se répète toutes les 10 secondes, le système peut commander 5 buses pendant 5 secondes puis les 5 autres buses les 5 secondes suivantes. Pendant ces 5 secondes d'arrêt entre 2 injections par une buse, il y a du liquide piégé dans le flexible et qui va naturellement maintenir une surpression dans la buse considérée.

Si la pression coté gaz de balayage est supérieure à celle du fluide cryogène, on aura quelques infimes parties de gaz mélangées à du cryogène, ce qui n'a aucune conséquence fâcheuse sur le procédé.

Entre 2 opérations de production, durant plusieurs minutes ou dizaines de minutes, le fluide cryogène s'est vaporisé, la pression diminue et on peut alors faire intervenir le balayage gaz (et c'est durant ces temps que le balayage en gaz permet de maintenir une surpression dans la buse).
- Selon la présente invention chaque buse alimentant l'équipement de refroidissement est individuellement alimentée par une électrovanne, de manière notamment à pouvoir gérer l'injection dans une buse indépendamment des autres buses, et ainsi pouvoir séquencer les phases d'injection. De manière également à permettre de maîtriser le débit injecté par buse. On conçoit également qu'ainsi, on peut injecter au travers de certaines des buses seulement, cela en fonction des besoins, et d'ainsi proposer un apport de cryogène optimal.
- Pour les raisons ci-après développées, la présente invention propose des conditions de balayage où la ligne amenant le gaz de balayage à chaque buse est munie en série d'un orifice calibré et d'un capteur de pression, ligne de balayage se raccordant sur la ligne d'apport de cryogène, entre l'électrovanne et la buse considérée.

Cet arrangement permet de limiter le débit et de surveiller de façon indépendante la pression dans chacune des buses.

Le capteur de pression est là pour détecter et alerter sur une pression inférieure à un seuil prédéfini, signe que la buse n'est plus ou pas assez balayée.

En effet, l'orifice calibré permet de définir un point de fonctionnement, pour un débit de fuite donné de la buse une valeur de pression s'établit dans la buse. Si cette valeur est trop faible, alors on peut supposer l'existence de fuites (clamp mal serré, joint endommagé...).

Cet arrangement présente l'avantage de pouvoir identifier immédiatement la buse en défaut et de cibler une intervention sur celle-ci.

L'orifice calibré permet par ailleurs d'assurer la sécurité en limitant le débit et en s'affranchissant de tout risque.

(la pression dans une buse étant typiquement très faible -généralement moins de 0,5bar à 1 bar-, le débit étant limité par l'orifice calibré, le démontage d'une buse peut se faire sans couper l'alimentation en gaz pour le balayage).
- Selon un mode préféré de l'invention, on équipe la portion de canalisation d'amenée du gaz de balayage, se raccordant sur la ligne d'apport de cryogène, également d'une section enroulée de type « queue de cochon ».
- Selon un autre des modes préférés de mise en œuvre de l'invention, on équipe la portion de canalisation d'amenée du gaz de balayage, se raccordant sur la ligne d'apport de cryogène, d'un clapet anti-retour.

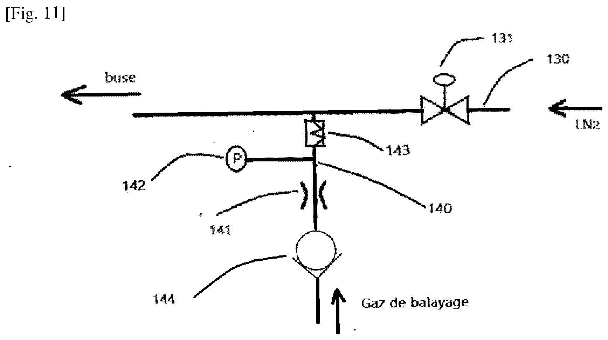

La [Fig.11] annexée présente une vue schématique partielle d'une portion d'installation conforme à l'invention, où l'on reconnait les éléments suivants :
- 130 : ligne d'apport de cryogène
- 131 : électrovanne
- 140 : ligne d'apport de gaz de balayage
- 141 : orifice calibré
- 142 : capteur de pression
- 143 : moyen de type « queue de cochon »
- 144 : clapet anti-retour

La présente invention concerne alors une installation de refroidissement de produits, notamment alimentaires, comprenant une enceinte, notamment de type malaxeur ou pétrin, permettant de contenir un produit à refroidir, et comprenant un dispositif d'injection d'un fluide cryogénique dans l'enceinte, dispositif permettant l'injection du fluide en un ou plusieurs points situé(s) en partie basse (base) de l'enceinte, dispositif qui comprend une ou plusieurs buses d'injection pouvant être raccordées à ladite partie basse, où l'installation de refroidissement comprend une installation d'alimentation du ou de chacune des buses d'injection en un gaz de balayage, par exemple en air comprimé ou encore en azote gazeux, buses d'injection qui sont alimentées en fluide cryogénique et en gaz de balayage par un ensemble de canalisations,
se caractérisant par la mise en œuvre des mesures suivantes :
- l'ensemble de canalisations comprend pour chacune des buses une ligne d'alimentation de la buse considérée en fluide cryogénique, ligne qui est munie d'une électrovanne ;
- l'ensemble de canalisations comprend pour chacune des buses, une ligne d'alimentation de la buse considérée en ledit gaz de balayage, chaque ligne d'alimentation en gaz de balayage étant munie en série d'un orifice calibré et d'un capteur de pression, ligne de balayage se raccordant, en aval du capteur, sur la ligne d'alimentation en fluide cryogénique lui correspondant pour une buse considérée, en un point de la ligne d'alimentation en fluide cryogénique se situant entre l'électrovanne et la buse considérée.

La présente invention concerne également un procédé de refroidissement de produits, notamment alimentaires, mis en œuvre dans une installation de refroidissement, installation comprenant une enceinte, notamment de type malaxeur ou pétrin, permettant de contenir un produit à refroidir, et comprenant un dispositif d'injection d'un fluide cryogénique dans l'enceinte, dispositif permettant l'injection du fluide en un ou plusieurs points situé(s) en partie basse (base) de l'enceinte, dispositif qui comprend une ou plusieurs buses d'injection pouvant être raccordées à ladite partie basse, où l'installation de refroidissement comprend une installation d'alimentation du ou de chacune des buses d'injection en un gaz de balayage, par exemple en air comprimé ou encore en azote gazeux, buses d'injection qui sont alimentées en fluide cryogénique et en gaz de balayage par un ensemble de canalisations,
se caractérisant par la mise en œuvre des mesures suivantes :
   - l'ensemble de canalisations comprend pour chacune des buses une ligne d'alimentation de la buse considérée en fluide cryogénique, ligne munie d'une électrovanne ;
   - l'ensemble de canalisations comprend pour chacune des buses, une ligne d'alimentation de la buse considérée en ledit gaz de balayage, chaque ligne d'alimentation en gaz de balayage étant munie en série d'un orifice calibré et d'un capteur de pression, ligne de balayage se raccordant, en aval du capteur, sur la ligne d'alimentation en fluide cryogénique lui correspondant pour une buse considérée, en un point de la ligne d'alimentation en fluide cryogénique se situant entre l'électrovanne et la buse considérée ;
et se caractérisant en ce que, si ledit capteur de pression détecte une pression inférieure à un seuil déterminé, une alerte est générée, par exemple pour demander une inspection de l'installation de refroidissement ou encore par exemple pour signaler que les buses ne sont pas restées en surpression et que des produits ont potentiellement pu s'introduire dans la buse.

## Revendications

1. Installation de refroidissement de produits, notamment alimentaires, comprenant une enceinte, notamment de type malaxeur ou pétrin, permettant de contenir un produit à refroidir, et comprenant un dispositif d'injection d'un fluide cryogénique dans l'enceinte, dispositif permettant l'injection du fluide en un ou plusieurs points situé(s) en partie basse (base) de l'enceinte, dispositif qui comprend une ou plusieurs buses d'injection pouvant être raccordées à ladite partie basse, où l'installation de refroidissement comprend une installation (120) d'alimentation du ou de chacune des buses d'injection en un gaz de balayage, par exemple en air comprimé ou encore en azote gazeux, buses d'injection qui sont alimentées en fluide cryogénique et en gaz de balayage par un ensemble de canalisations,
**se caractérisant par** la mise en œuvre des mesures suivantes :
- l'ensemble de canalisations comprend pour chacune des buses une ligne (130) d'alimentation de la buse considérée en fluide cryogénique, ligne qui est munie d'une électrovanne (131);
- l'ensemble de canalisations comprend pour chacune des buses, une ligne (140) d'alimentation de la buse considérée en ledit gaz de balayage, chaque ligne d'alimentation en gaz de balayage étant munie en série d'un orifice calibré (140) et d'un capteur de pression (141), ligne de balayage se raccordant, en aval du capteur, sur la ligne d'alimentation en fluide cryogénique lui correspondant pour une buse considérée, en un point de la ligne d'alimentation en fluide cryogénique se situant entre l'électrovanne et la buse considérée.

2. Procédé de refroidissement de produits, notamment alimentaires, mis en œuvre dans une installation de refroidissement, installation comprenant une enceinte, notamment de type malaxeur ou pétrin, permettant de contenir un produit à refroidir, et comprenant un dispositif d'injection d'un fluide cryogénique dans l'enceinte, dispositif permettant l'injection du fluide en un ou plusieurs points situé(s) en partie basse (base) de l'enceinte, dispositif qui comprend une ou plusieurs buses d'injection pouvant être raccordées à ladite partie basse, où l'installation de refroidissement comprend une installation (120) d'alimentation du ou de chacune des buses d'injection en un gaz de balayage, par exemple en air comprimé ou encore en azote gazeux, buses d'injection qui sont alimentées en fluide cryogénique et en gaz de balayage par un ensemble de canalisations,
**se caractérisant par** la mise en œuvre des mesures suivantes :
- l'ensemble de canalisations comprend pour chacune des buses une ligne (130) d'alimentation de la buse considérée en fluide cryogénique, ligne munie d'une électrovanne (131);
- l'ensemble de canalisations comprend pour chacune des buses, une ligne (140) d'alimentation de la buse considérée en ledit gaz de balayage, chaque ligne d'alimentation en gaz de balayage étant munie en série d'un orifice calibré (141) et d'un capteur de pression (142), ligne de balayage se raccordant, en aval du capteur, sur la ligne d'alimentation en fluide cryogénique lui correspondant pour une buse considérée, en un point de la ligne d'alimentation en fluide cryogénique se situant entre l'électrovanne et la buse considérée ;
et **se caractérisant en ce que**, si ledit capteur de pression détecte une pression inférieure à un seuil déterminé, une alerte est générée, par exemple pour demander une inspection de l'installation de refroidissement ou encore par exemple pour signaler que les buses ne sont pas restées en surpression et que des produits ont potentiellement pu s'introduire dans la buse.
